# EUROPEAN PATENT APPLICATION

(11) **EP 4 575 904 A1**
(43) Date of publication of application: **25.06.2025**
(21) Application number: 24194077.4
(22) Date of filing: 12.08.2024
(51) Int. Cl.: G06N 3/063, G06N 3/084

(54) **METHOD AND APPARATUS FOR PARALLEL TRAINING OF NEURAL NETWORK MODEL**

(30) Priority: 19.12.2023 KR 20230185702
(71) Applicant: Samsung Electronics Co., Ltd, Suwon-si, Gyeonggi-do 16677 (KR)
(72) Inventor: Kim, Myeong Woo, Suwon-si, Gyeonggi-do 16678 (KR); Kim, Yongdeok, Suwon-si, Gyeonggi-do 16678 (KR)
(74) Representative: Grünecker Patent- und Rechtsanwälte PartG mbB

(57) **Abstract**

A method and apparatus for parallel training of a neural network model are provided. The method includes generating a plurality of partial data sets by dividing training data for a neural network model, identifying a plurality of pipeline stages of the neural network model, determining a plurality of keeping policies, wherein each of the plurality of keeping policies corresponds to values generated by a selected pipeline stage of the plurality of the pipeline stages using a selected partial data set of the plurality of partial data sets, and training the neural network model by processing the values generated by the selected pipeline stages based on the selected partial data set according to a corresponding keeping policy for each of the plurality of keeping policies.

## Description

### BACKGROUND

### 1. Field

The following disclosure relates to a method and apparatus for parallel training of a neural network model.

### 2. Description of Related Art

In recent years, the field of machine learning and artificial intelligence has seen rapid advancements, driven largely by the development and deployment of deep neural network models. The models have demonstrated remarkable performance across various tasks such as image recognition, natural language processing, and reinforcement learning. However, one of the primary challenges associated with training deep neural networks is the computational complexity and time required, particularly when dealing with large-scale datasets and complex architectures. Traditional sequential training methods often lead to long training times and resource inefficiencies, hindering the scalability and practical deployment of deep learning systems.

In some cases, parallel training techniques may leverage distributed computing resources such as multi-core CPUs, GPUs (Graphics Processing Units), and specialized accelerators (e.g., TPUs - Tensor Processing Units) to accelerate the training process. By distributing the workload across multiple processing units simultaneously, parallel training can significantly reduce training time and enhance scalability, enabling the training of large models and the processing of large-scale datasets efficiently. However, the design and implementation of effective parallel training algorithms and architectures present technical and computational challenges, including optimizing communication overhead, load balancing, and synchronization among distributed computing nodes. Therefore, there is a need in the art for advanced systems and methods of parallel training of neural network models.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is what is claimed in the independent claims. Preferred embodiments are specified in the dependent claims.

The present disclosure describes systems and methods for parallel training of a neural network model. Embodiments of the present disclosure are configured to perform an adaptive activation recomputation in pipeline parallelism. In some cases, the adaptive recomputation may enable a reduction of training time by increasing memory efficiency. According to an embodiment, the neural network model may be divided into partial models that may be trained using a plurality of pipeline stages.

In some cases, methods and systems of the present disclosure include calculation of an activation size for each of the partial models during a forward propagation operation. According to an embodiment, one or more layer gradients may be computed based on the activations during a backpropagation process. In some cases, the activations may be recomputed, selectively recomputed, or not recomputed for a data set in a pipeline stage of the plurality of pipeline stages during the parallelization process. In some cases, the total learning time for the neural network may be reduced by adaptively applying the activation recomputation operation.

According to an embodiment, a method of parallel training includes generating a plurality of partial data sets by dividing training data for a neural network model, identifying a plurality of pipeline stages of the neural network model, determining a plurality of keeping policies, wherein each of the plurality of keeping policies corresponds to values generated by a selected pipeline stage of the plurality of the pipeline stages using a selected partial data set of the plurality of partial data sets, and training the neural network model by processing the values generated by the selected pipeline stages based on the selected partial data set according to a corresponding keeping policy for each of the plurality of keeping policies.

According to an embodiment, an electronic device includes a processor, and a memory configured to store instructions, wherein, when executed by the processor, the instructions cause the electronic device to generate a plurality of partial data sets by dividing training data for a neural network model, identify a plurality of pipeline stages of the neural network model, determine a plurality of keeping policies, wherein each of the plurality of keeping policies corresponds to values generated by a selected pipeline stage of the plurality of the pipeline stages using a selected partial data set of the plurality of partial data sets, and train the neural network model by processing the values generated by the selected pipeline stages based on the selected partial data set according to a corresponding keeping policy for each of the plurality of keeping policies.

According to an embodiment, a method of training a neural network model comprises computing first values at a first pipeline stage of the neural network model based on a first partial data set, processing the first values according to a first keeping policy based on the first pipeline stage and the first partial data set, computing second values at the first pipeline stage of the neural network model based on a second partial data set, processing the second values according to a second keeping policy based on the first pipeline stage and the second partial data set, computing third values at a second pipeline stage of the neural network model based on the first partial data set, processing the third values according to a third keeping policy based on the second pipeline stage and the first partial data set, computing fourth values at the second pipeline stage of the neural network model based on the second partial data set, and processing the fourth values according to a fourth keeping policy based on the second pipeline stage and the second partial data set.

Other features and aspects will be apparent from the following detailed description, the drawings, and the claims.

### BRIEF DESCRIPTION OF THE DRAWINGS

FIG. 1 illustrates an example of a pipeline parallelization operation without recomputation according to an embodiment.
FIG. 2 illustrates a training process of a neural network model using a gradient according to an embodiment.
FIG. 3 is a graph illustrating an example of memory usage of each pipeline stage without recomputation according to an embodiment.
FIG. 4 illustrates an example of a keeping policy of an activation according to an embodiment.
FIG. 5 illustrates an example of a structure of a neural network model according to an embodiment.
FIG. 6 illustrates an example of a pipeline parallelization operation including recomputation according to an embodiment.
FIG. 7 illustrates a flowchart of an example of a process of selecting a keeping policy using priority according to an embodiment.
FIG. 8 illustrates an example of applying priority of keeping policies according to an embodiment.
FIG. 9 illustrates a flowchart of an example of a parallel training method according to an embodiment.
FIG. 10 illustrates an example of a configuration of an electronic device.
FIG. 11 illustrates a flowchart of an example of a parallel training process according to an embodiment.
FIG. 12 illustrates a flowchart of an example of a neural network training process according to an embodiment.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The technical automation of a recognition process may be achieved through the implementation of a neural network model by a processor, serving as a specialized computational structure. The models may provide a computationally intuitive mapping between an input pattern and an output pattern based on extensive training. In some cases, the ability of the neural network model to be trained to generate such mapping may be referred to as training ability of the neural network. Moreover, such a specialized and well-trained neural network, specialized based on training, may include a generalization ability that provides for generation of an accurate output for an input pattern. In some cases, the output corresponding to the input pattern may not be part of the training dataset. In some cases, methods such as model parallelization and/or data parallelization may be employed to enable rapid convergence of the neural network towards desired results and to process training and inference operations.

The present disclosure describes systems and methods for parallel training of a neural network model. Embodiments of the present disclosure are configured to perform an adaptive activation recomputation in case of a pipeline parallelism. In some cases, the adaptive recomputation may enable a reduction of training time by increasing memory efficiency. According to an embodiment, the neural network model may be divided into partial models that may be trained using a plurality of pipeline stages.

In some cases, methods and systems of the present disclosure include calculation of an activation size for each of the partial models during a forward propagation operation of a neural network training process. According to an embodiment, one or more layer gradients may be computed based on the activations during a backpropagation operation of the neural network training process. In some cases, the activations may be recomputed, selectively recomputed, or not recomputed for each of the plurality of pipeline stages during the parallelization process. In some cases, the total learning time for the neural network may be reduced by adaptively applying the activation recomputation operation.

Conventionally used techniques for parallel training may calculate a memory capacity to be occupied in the size of an activation in a training method of a large deep learning model. In some cases, conventional systems may only generate activation sizes. However, such methods may not be able to calculate activation sizes for different cases and activation recomputation range change for each pipeline stage. Additionally, such methods may not be able to compute activation recomputation ranges for each pipeline stage that enables optimization of the memory use efficiency and the training time.

By contrast, embodiments of the present disclosure include an adaptive activation recomputation method in pipeline parallelism that may be applied for training of large models based on a plurality of pipeline stages. For example, an embodiment may be configured to compute an activation recomputation range for each pipeline stage based on a full recomputation, selective recomputation, or a no recomputation policy.

According to an embodiment, the method disclosed herein may be configured to maximize the memory usage and reduce the training time by selecting a policy for each pipeline stage. In some cases, the training procedure for a neural network model may include forward propagation and backward propagation operations. According to an embodiment, an activation obtained during the forward propagation may be used to calculate a gradient during the backward propagation. In some cases, the activation checkpoint may refer to a training method in which an activation generated during the forward propagation may not be stored in the memory until the backward propagation to prevent a memory shortage and an activation may be recomputed during the backward propagation.

According to an embodiment, the activation checkpoint may include a full recomputation policy, a selective recomputation policy, and a non-recomputation policy. In some cases, the policy may be selected for each dataset of each pipeline stage. In some cases, the policy may be selected to maximize the memory usage. An embodiment of the present invention may include a priority for the policy selection. In some cases, a priority may be assigned, i.e., referred to herein as keeping policy, in the order of non-recomputation policy, selective recomputation policy, and full recomputation policy. In case of a competing datasets, the closest dataset may be selected. In some examples, the policy may be selected to minimize the training time.

An embodiment of the present disclosure includes a method for pipeline parallelism that may reduce a size of the neural network model. In some cases, the model may be split into multiple layer units, e.g., when the size of the model to be trained is large compared to the memory (such as a GPU memory) availability. According to an embodiment, in case of the pipeline parallelization method that alternates forward and backward propagation processes, a forward computed value may be transferred sequentially from a first stage to the last stage. In some cases, the backward propagation may begin which transfers a computation result for each unit from the last stage to the first stage.

According to an embodiment, during a training process, a forward operation value may be stored till the backward operation begins since an activation result from the forward operation may be used to calculate a gradient during the backward operation. In some cases, a plurality of the activation results may be accumulated in the initial pipeline stage when the number of partial datasets is high. As such, an early pipeline stage may include a high amount of memory usage.

An embodiment of the present disclosure is configured to perform an activation checkpointing. In some cases, activation checkpointing may refer to a method in which an activation result value used for gradient calculation during backward propagation may not be stored till the beginning of the backward propagation. In some cases, an activation value may be recomputed during the backward propagation operation. In some examples, a range of activation recomputation may be optimized (e.g., selectively optimized) to reduce the recomputation costs (e.g., recomputation costs may affect the total training time).

Accordingly, embodiments of the present disclosure may be configured to compute the activation size for each activation recomputation range. For example, the activation size may be computed during the model build stage based on model parallelization (i.e., before the actual training is performed). In some examples, the activation size may be computed based on an application of the model parallelization (e.g., tensor, pipeline, sequence, etc.). In some cases, the memory size availability for each partial data set in each pipeline stage may be performed.

In some cases, the activation recomputation range may be set based on priority (such as no recomputation policy followed by selective recomputation policy and finally full recomputation policy). In some examples, in case the partial data set is not the last of the data set indices and in case of an available memory space, the last partial data set may be priorly assigned a no recomputation policy since the total training time depends on the training of the last partial data set in pipeline parallelization.

Embodiments of the present disclosure provide a method of parallel training of a neural network. In some cases, the method comprises generating a plurality of partial data sets by dividing training data for the neural network model. Additionally, the method identifies a plurality of pipeline stages of the model and determines a plurality of keeping policies. As described herein, each of the plurality of keeping policies corresponds to values generated by a selected pipeline stage of the plurality of the pipeline stages using a selected partial data set of the plurality of partial data sets. Finally, the neural network model may be trained by processing the values generated by the selected pipeline stages based on the selected partial data set according to a corresponding keeping policy for each of the plurality of keeping policies.

Additionally, according to an embodiment, a method of training the neural network comprises computing a set of values corresponding to a pipeline stage of the neural network model based on a partial data set. In some cases, each of the computed set of values may further be processed according to a keeping policy based on the corresponding pipeline stage and the partial data set.

Accordingly, by applying an activation recomputation range for each pipeline stage during a pipeline parallelization process, embodiments of the present disclosure may enable an increase in the memory usage efficiency. Additionally, by adaptively applying the activation recomputation order in case of a high number of partial data sets, embodiments are able to achieve a reduction in the total learning time which helps in reducing the associated training costs.

The following detailed structural or functional description is provided as an example only and various alterations and modifications may be made to the examples. Here, the examples are not construed as limited to the disclosure and should be understood to include all changes, equivalents, and replacements within the idea and the technical scope of the disclosure.

Terms, such as first, second, and the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

It should be noted that if one component is described as being "connected", "coupled", or "joined" to another component, a third component may be "connected", "coupled", and "joined" between the first and second components, although the first component may be directly connected, coupled, or joined to the second component.

The singular forms "a," "an," and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

As used herein, "at least one of A and B", "at least one of A, B, or C," and the like, each of which may include any one of the items listed together in the corresponding one of the phrases, or all possible combinations thereof.

Unless otherwise defined, all terms, including technical and scientific terms, used herein have the same meaning as commonly understood by one of ordinary skill in the art to which this disclosure pertains. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

Hereinafter, examples will be described in detail with reference to the accompanying drawings. When describing the embodiments with reference to the accompanying drawings, like reference numerals refer to like elements and a repeated description related thereto will be omitted.

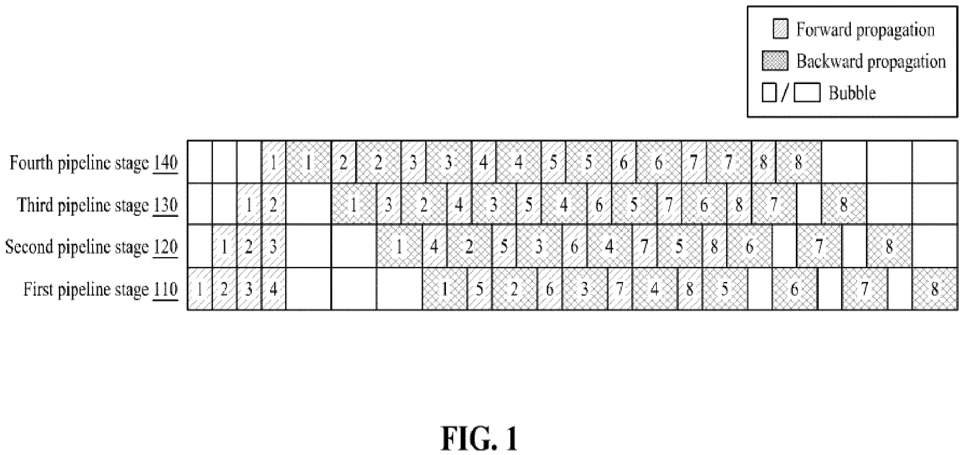

FIG. 1 illustrates an example of a pipeline parallelization operation without recomputation according to an embodiment. As shown in FIG. 1, the horizontal axis may represent different time periods and the vertical axis may represent different pipeline stages. Referring to FIG. 1, parallel training of a neural network model may be performed using pipeline stages 110, 120, 130, and 140. The pipeline stages 110 to 140 may represent different portions of a neural network model that may operate sequentially. For example, each of the pipeline stages 110 to 140 may include different layers or blocks of a neural network model.

Machine learning parameters, also known as model parameters or weights, are variables that provide a behavior and characteristics of a machine learning model. Machine learning parameters can be learned or estimated from training data and are used to make predictions or perform tasks based on learned patterns and relationships in the data. Machine learning parameters are typically adjusted during a training process to minimize a loss function or maximize a performance metric. The goal of the training process is to find optimal values for the parameters that allow the machine learning model to make accurate predictions or perform well on the given task.

For example, during the training process, an algorithm adjusts machine learning parameters to minimize an error or loss between predicted outputs and actual targets according to optimization techniques like gradient descent, stochastic gradient descent, or other optimization algorithms. Once the machine learning parameters are learned from the training data, the machine learning parameters are used to make predictions on new, unseen data.

Artificial neural networks (ANNs) have numerous parameters, including weights and biases associated with each neuron in the network, that control a degree of connections between neurons and influence the neural network's ability to capture complex patterns in data. An ANN is a hardware component or a software component that includes a number of connected nodes (i.e., artificial neurons) that loosely correspond to the neurons in a human brain. Each connection, or edge, transmits a signal from one node to another (like the physical synapses in a brain). When a node receives a signal, it processes the signal and then transmits the processed signal to other connected nodes.

In some cases, the signals between nodes comprise real numbers, and the output of each node is computed by a function of the sum of its inputs. In some examples, nodes may determine their output using other mathematical algorithms, such as selecting the max from the inputs as the output, or any other suitable algorithm for activating the node. Each node and edge are associated with one or more node weights that determine how the signal is processed and transmitted.

In ANNs, a hidden (or intermediate) layer includes hidden nodes and is located between an input layer and an output layer. Hidden layers perform nonlinear transformations of inputs entered into the network. Each hidden layer is trained to produce a defined output that contributes to a joint output of the output layer of the ANN. Hidden representations are machine-readable data representations of an input that are learned from hidden layers of the ANN and are produced by the output layer. As the understanding of the ANN of the input improves as the ANN is trained, the hidden representation is progressively differentiated from earlier iterations.

During a training process of an ANN, the node weights are adjusted to improve the accuracy of the result (i.e., by minimizing a loss which corresponds in some way to the difference between the current result and the target result). The weight of an edge increases or decreases the strength of the signal transmitted between nodes. In some cases, nodes have a threshold below which a signal is not transmitted at all. In some examples, the nodes are aggregated into layers. Different layers perform different transformations on their inputs. The initial layer is known as the input layer and the last layer is known as the output layer. In some cases, signals traverse certain layers multiple times.

Referring again to FIG. 1, the pipeline stages 110 to 140 may be performed by different processors. For example, the processors may include at least one of a graphics processing unit (GPU), a neural processing unit (NPU), and an accelerator. For example, the first pipeline stage 110 through the fourth pipeline stage 140 may be performed by the first GPU, the second GPU, the third GPU, and the fourth GPU. Although FIG. 1 illustrates four pipeline stages 110 to 140, embodiments are not limited thereto.

According to an embodiment, the neural network model and the training data set may be split based on the pipeline stages 110 to 140. For example, the neural network model may be split into partial models and the training data set may be split into partial data sets. For example, layers of the neural network model may be split into partial models and weights of the neural network model may be split into the partial models. In some cases, the partial data sets may correspond to (or be referred to as) micro-batches. Hereinafter, a representative example that the partial models include partial layers of the neural network model may be described. However, embodiments are not limited thereto.

The partial models may be trained in the pipeline stages 110 to 140. For example, the neural network model may be split into a first partial model, a second partial model, a third partial model, and a fourth partial model, where the first to fourth partial models may be trained in the pipeline stages 110 to 140. For example, the first to fourth partial models may be trained in the pipeline stages 110 to 140 by the first to fourth GPUs.

According to an embodiment, the partial data sets may be trained in the pipeline stages 110 to 140. For example, as shown in FIG. 1, the training data set may be split into first to eighth partial data sets. The partial data sets may be sequentially and parallelly trained using a pipeline method. For example, a first corresponding data set of the first partial data set may be trained in the first pipeline stage 110. Thereafter, a second corresponding data set of the first partial data set may be trained in the second pipeline stage 120 based on a training operation result of the first corresponding data set of the first partial data set of the first pipeline stage 110.

In some cases, the first partial data set may be represented as a different state in the pipeline stages 110 to 140. For example, the representation of the first partial data may depend on the training operation result. In some cases, a partial data set of each state may be referred to as a corresponding data set. For example, when an i-th partial data set is trained in a j-th pipeline stage 110, the i-th partial data set may be referred to as a j-th corresponding data set of the i-th partial data set. As used herein, i may be a natural number between 1 and I and j may be a natural number between 1 and J. Referring to the example of FIG. 1, I may be 8 and J may be 4. As shown in FIG. 1, the numbers 1 to 8 may represent an index value i value of a partial data set.

Training of the neural network model may include forward propagation and backward propagation. According to the forward propagation, the training operation result may be an activation. According to an embodiment, backward propagation may be performed using each partial data set when forward propagation using each partial data set is completed. For example, referring to a training process of a partial data set identified as a value of 1 in FIG. 1, forward propagation based on the first partial data set may be sequentially performed in the first pipeline stage 110 to the fourth pipeline stage 140. In some examples, backward propagation based on the first partial data set may be sequentially performed in the fourth pipeline stage 140 to the first pipeline stage 110 when the forward propagation based on the first partial data set is completed.

The neural network model may be trained using a gradient. An activation may be generated by forward propagation and a gradient may be calculated using the activation in backward propagation. The activation generated during forward propagation may be kept in a memory and used to calculate a gradient. An entirety or a portion of the activation may be stored in the memory. In some cases, training time may decrease since calculation of an activation is not separately required when calculating a gradient. In some cases, a memory shortage may occur when sizes of activations generated during forward propagation are large since a memory space is used by an activation before calculating a gradient.

In some cases, a policy of recomputing an activation when calculating a gradient may be used, i.e., instead of a policy of keeping an entirety or a portion of the activation in the memory to calculate the gradient. In this case, a memory space occupied by the activation may be released when an activation is generated in forward propagation. The released memory space may be used by other pieces of data. In some cases, an activation may be newly generated through recomputation when an activation is required to calculate a gradient during backward propagation. Accordingly, a memory shortage may be prevented since a memory space occupied by activations may be minimized. In some cases, recomputation of an activation may increase the training time when calculating a gradient.

According to an embodiment, keeping policies of activations generated by forward propagation of partial models may be individually selected with respect to corresponding data sets of partial data sets processed in the pipeline stages 110 to 140. In some cases, the activations may be used to calculate gradients of backward propagation of the partial models of the neural network model. For example, a first keeping policy of the keeping policies may be used to train a corresponding data set of the first partial data set of the partial data sets in the first pipeline stage 110 and a second keeping policy of the keeping policies, which is different from the first keeping policy, may be used to train a corresponding data set of the second partial data set of the partial data sets in the first pipeline stage 110. According to an embodiment, the keeping policies may be selected based on a memory usage state. In some cases, the keeping policies may be selected to maximize the memory usage within the available memory capacity.

In some cases, a strategy for parallel training of the neural network model may be generated based on the selected keeping policies when the selection of the keeping policies is completed. For example, the strategy may include information about the pipeline stages 110 to 140, the partial models of the neural network model, the partial data sets of the training data set, the keeping policies, or a combination thereof. The neural network model may be trained based on the strategy.

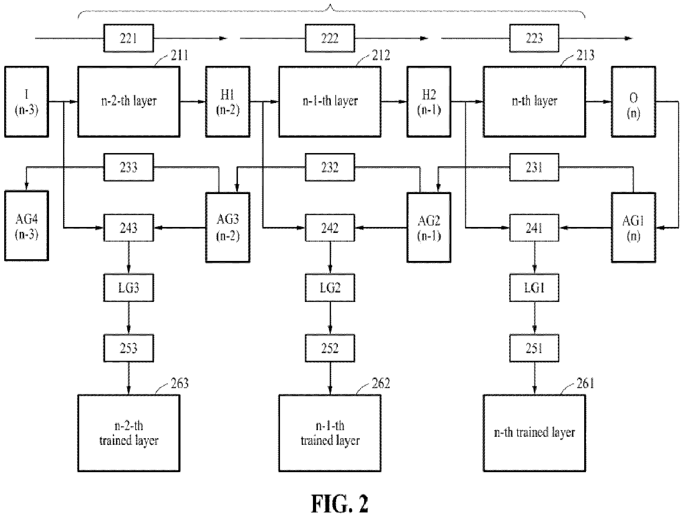

FIG. 2 illustrates a training process of a neural network model using a gradient according to an embodiment. Referring to FIG. 2, a neural network model 210 may include an n-2-th layer 211, an n-1-th layer 212, and an n-th layer 213. The layers 211, 212, and 213 may include weights, respectively, and the weights may be updated during a training process. Each of the weights may be referred to as a parameter. As used herein, n may represent the number of layers of the neural network model 210. FIG. 2 illustrates an example that n=3, but embodiments may not be limited thereto.

Forward propagation operations 221, 222, and 223, activation gradient computational operations 231, 232, and 233, layer gradient computational operations 241, 242, and 243, and model update operations 251, 252, and 253 may be performed to train the neural network model 210. The activation gradient computational operations 231, 232, and 233 and the layer gradient computational operations 241, 242, and 243 may correspond to a backward propagation operation.

In some cases, the forward propagation operation 221 may generate a hidden activation H1 by executing the n-2-th layer 211 based on input data I. Additionally, the forward propagation operation 222 may generate a hidden activation H2 by executing the n-1-th layer 212 based on the hidden activation H1. Additionally, the forward propagation operation 223 may generate an output activation O by executing the n-th layer 213 based on the hidden activation H2.

Activation gradient data AG1 may be determined based on a comparison result between the output activation O and ground truth GT. In some cases, the activation gradient data AG1 may correspond to a loss. The computational operation 231 may generate activation gradient data AG2 using the activation gradient data AG1 and the n-th layer 213. Additionally, the computational operation 232 may generate activation gradient data AG3 using the activation gradient data AG2 and the n-1-th layer 212. Additionally, the computational operation 233 may generate activation gradient data AG4 using the activation gradient data AG3 and the n-2-th layer 211.

The computational operation 241 may generate layer gradient data LG1 using the activation gradient data AG1 and the hidden activation H2. Similarly, the computational operation 242 may generate layer gradient data LG2 using the activation gradient data AG2 and the hidden activation H1. Additionally, the computational operation 243 may generate layer gradient data LG3 using the activation gradient data AG3 and the input data I. The gradient may be represented as ΔW, where W may represent a weight. The term "gradient" may refer to a layer gradient. For example, as described herein, the layer gradient may refer to the gradient of the loss function with respect to the parameters (weights and biases) of a specific layer within the network. In some cases, the layer gradient may represent the rate of change of the loss function relative to the parameters of that layer during the process of training the neural network using backpropagation.

In case of backward propagation operations, the activations H1, H2, and O generated by the forward propagation operations 221, 222, and 223 may be used to calculate layer gradients. According to an embodiment, one or more activations H1, H2, and O may be stored in the memory based on the keeping policy.

The model update operation 251 may update a weight of the n-th layer 213 based on the layer gradient data LG1. Additionally, the model update operation 252 may update a weight of the n-1-th layer 212 based on the layer gradient data LG2. Additionally, the model update operation 253 may update a weight of the n-2-th layer 211 based on the layer gradient data LG3. The model update operations 251, 252, and 253 may be represented as W-(γ*ΔW). Here, γ may represent a learning rate. A trained n-th layer 261, a trained n-1 -th layer 262, and a trained n-2-th layer 263 may be generated based on the model update operations 251, 252, and 253.

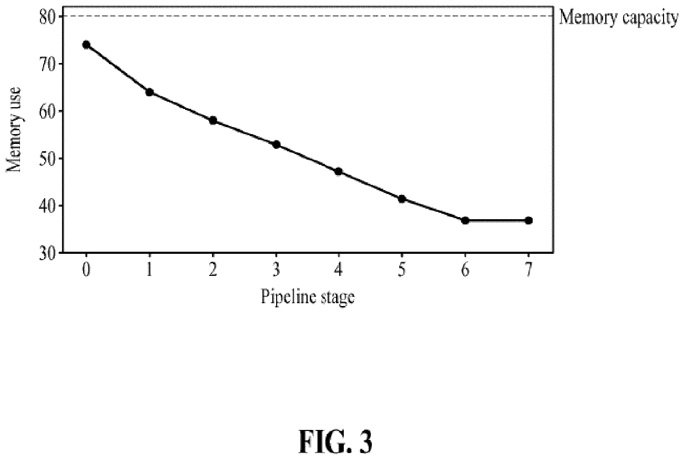

FIG. 3 illustrates an example of memory usage of each pipeline stage without performing a recomputation, according to an embodiment. Referring to FIG. 3, the memory usage may gradually decrease while proceeding from an initial pipeline stage (e.g., the first pipeline stage 110 of FIG. 1) to a final pipeline stage (e.g., the fourth pipeline stage 140 of FIG. 1). Accordingly, as a pipeline stage is close to the initial pipeline stage, an interval between a time point of forward propagation and a time point of backward propagation may increase. Additionally, activations to be kept from a time point of completion of the forward propagation to a time point of backward propagation may increase. According to an embodiment, the keeping policies of activations may be individually selected for each corresponding data set of each pipeline stage using the memory usage characteristic described herein.

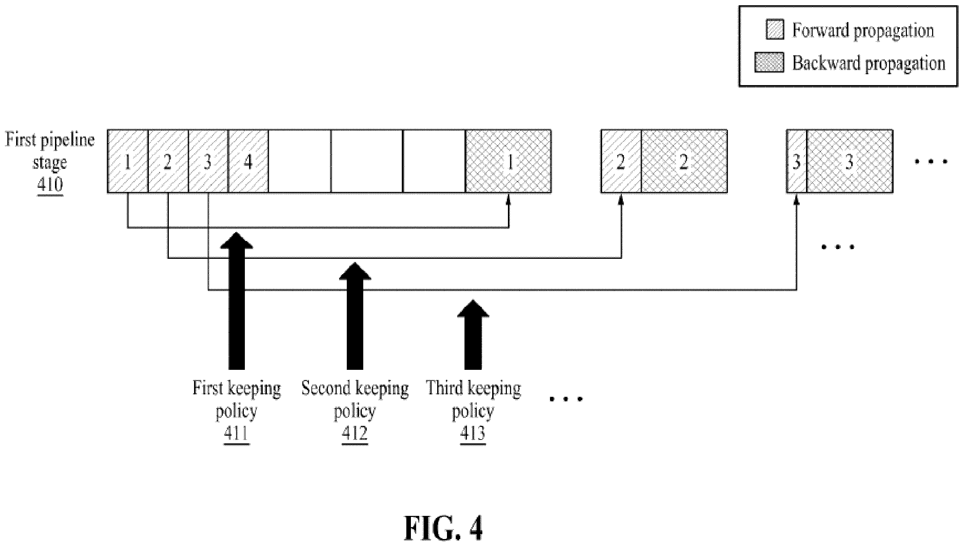

FIG. 4 illustrates an example of a keeping policy of an activation according to an embodiment. Referring to FIG. 4, forward propagation of corresponding data sets 1 to 4 of a first partial data set to a fourth partial data set may be performed in a first pipeline stage 410. Activations of the corresponding data sets 1 to 4 may be generated according to the forward propagation operation. In some cases, the activations may be stored in a memory. In some cases, the activations may be stored in the memory according to keeping policies 411, 412, and 413 of the activations. In some cases, activations may be stored in the memory until backward propagation operation or a memory space in which the activations are stored may be immediately released without keeping the activations.

The keeping policies 411 to 413 may be selected based on a memory usage state. For example, the keeping policies 411 to 413 may be selected to maximize the memory usage within the available memory capacity. The keeping policies 411 to 413 may include at least one of a full recomputation policy that generates activations by performing recomputation during backward propagation without keeping (e.g., storing) the activations. In some cases, the keeping policies may include a partial recomputation policy that keeps (e.g., stores) a portion of activations and generates the remaining portion of activations by performing recomputation during backward propagation. In some cases, the keeping policies may include a non-recomputation policy that keeps (e.g., storing) activations and does not perform recomputation and partial recomputation during backward propagation.

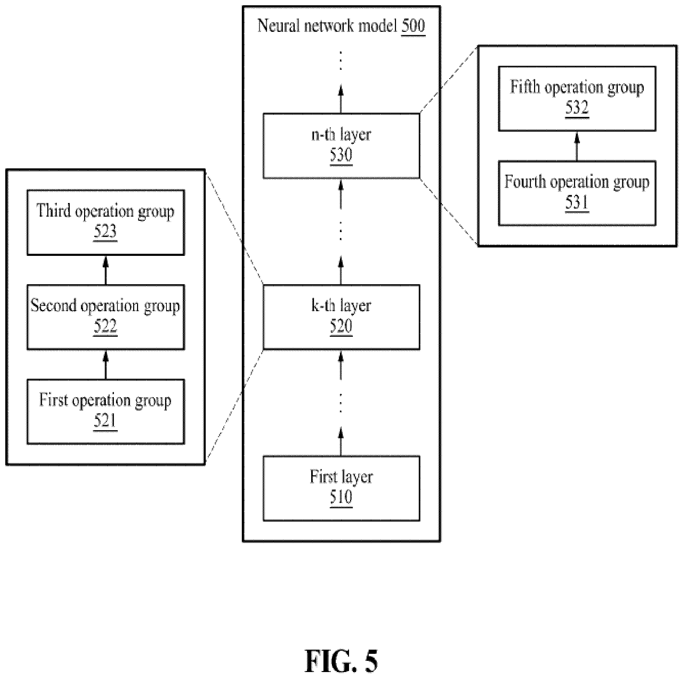

FIG. 5 illustrates an example of a structure of a neural network model according to an embodiment. Referring to FIG. 5, a neural network model 500 may include layers 510, 520, and 530 and the layers 510 to 530 may include various operations. The operations may be grouped based on various criteria. For example, a k-th layer 520 may include operation groups 521, 522, and 523 and an n-th layer 530 may include operation groups 531 and 532. In some cases, a variety of operation amounts of the operation groups 521 to 523, 531, and 532 and various capacities of operation results of the operation groups 521 to 523, 531, and 532 may be used. In some cases, the partial recomputation policy may be defined based on characteristics of the operation groups 521 to 523, 531, and 532.

For example, the fourth operation group 531 may have a smaller operation amount than the fifth operation group 532. In some cases, an operation result of the fourth operation group 531 may occupy a larger capacity than an operation result of the fifth operation group 532. Thus, it may be efficient to use the fourth operation group 531 as a partial recomputation target of the partial recomputation policy since the memory space efficiency may increase and a time delay due to recomputation may be minimized. In some cases, the k-th layer 520 and the n-th layer 530 may include different internal structures, such as the operation groups 521 to 523 and the operations groups 531 and 532. In case of the k-th layer 520 and the n-th layer 530, the different operation groups may be used as a target of partial recomputation.

In some examples, the neural network model 500 may include layers having the same internal structure. For example, the layers may be transformer layers. In some cases, the transformer layer(s) may include a self-attention operation group and a multi-layer perceptron (MLP) operation group. The self-attention operation group may have a smaller operation amount than the MLP operation group and an operation result of the self-attention operation group may have a larger capacity than an operation result of the MLP operation group. Thus, in case of the transformer layer(s), the self-attention operation group may be used as a target of partial recomputation of the partial recomputation policy.

For example, layers of one of pipeline stages (e.g., pipeline stages described with reference to FIG. 1) may include the same structure as the k-th layer 520 and a layer of another pipeline stages may have the same structure as the n-th layer 530. For example, the layers of a first pipeline stage may have the same structure of the n-th layer 530. In some cases, an operation group of the layers of the first pipeline stage may be selected as a target of partial recomputation. For example, the fourth operation group 531 may be selected as the target of partial recomputation. In some cases, a memory space in which an activation of the fourth operation group 531 is stored may be released after forward propagation of the layers of the first pipeline stage is performed. An activation of the fifth operation group 532 may be kept (e.g., stored) for gradient calculation of backward propagation. In some cases, partial recomputation of the fourth operation group 531 may be performed to calculate a gradient when backward propagation of the layers of the first pipeline stage is performed. The activation of the fifth operation group 532 may be loaded from the memory without performing a separate recomputation process. For example, the n-th layer 530 may be a transformer layer, the fourth operation group 531 may be a self-attention group, and the fifth operation group 532 may be an MLP operation group.

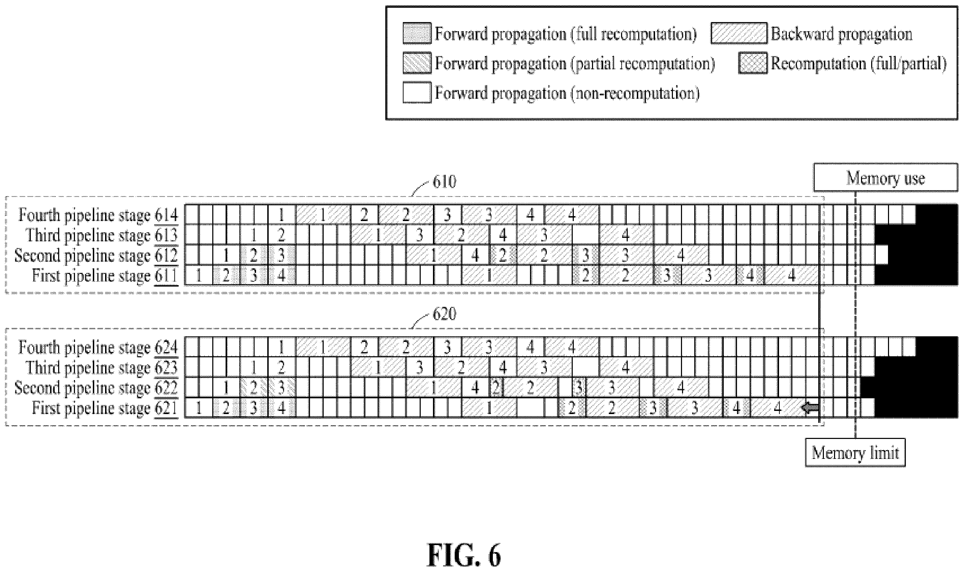

FIG. 6 illustrates an example of a pipeline parallelization operation including recomputation according to an embodiment. Referring to FIG. 6, a first training process 610 may represent an example in which a non-recomputation policy is selected with respect to a first corresponding data set of a first partial data set of a first pipeline stage 611, a second corresponding data set of a first partial data set of a second pipeline stage 612, a third corresponding data set of a first partial data set of a third pipeline stage 613, a third corresponding data set of a second partial data set of the third pipeline stage 613, and a fourth corresponding data set of a first partial data set of a fourth pipeline stage 614. Additionally, a full recomputation policy may be selected with respect to a first corresponding data set of a second partial data set of the first pipeline stage 611, a first corresponding data set of a third partial data set of the first pipeline stage 611, a first corresponding data set of a fourth partial data set of the first pipeline stage 611, a second corresponding data set of a second partial data set of the second pipeline stage 612, and a second corresponding data set of a third partial data set of the second pipeline stage 612.

In case of a forward computation of the first training process 610, activations of corresponding data sets to which the non-recomputation policy is applied may be kept (e.g., stored) in a memory. Additionally, activations of corresponding data sets to which the full recomputation policy is applied may not be kept in the memory. In case of a backward computation of the first training process 610, activations of corresponding data sets to which the non-recomputation policy is applied may be loaded from the memory for gradient calculation and activations of corresponding data sets to which the full recomputation policy is applied may be newly generated for gradient calculation.

In some cases, a second training process 620 may represent an example in which a partial recomputation policy is selected with respect to a second corresponding data set of a second partial data set of the second pipeline stage 622 and a second corresponding data set of a third partial data set of the second pipeline stage 622.

In case of forward computation of the second training process 620, activations of corresponding data sets to which the non-recomputation policy is applied may be kept in the memory. In some cases, activations of corresponding data sets to which the full recomputation policy is applied may not be kept in the memory. In some cases, activations of corresponding data sets to which the partial recomputation policy is applied may be partially stored in the memory. In case of backward computation of the second training process 620, activations of corresponding data sets to which the non-recomputation policy is applied may be loaded from the memory for gradient calculation. In some cases, activations of corresponding data sets to which the full recomputation policy is applied may be newly generated for gradient calculation. In some cases, activations of corresponding data sets to which the partial recomputation policy is applied may be loaded from the memory and other activations thereof may be newly generated.

In some cases, the partial recomputation policy may be selectively applied to the second training process 620. Some of the activations of the corresponding data sets to which the partial recomputation policy is applied may be loaded from the memory without performing a separate recomputation process. Accordingly, a memory usage level of the second training process 620 may be high compared to the first training process 610. Additionally, a training time of the second training process 620 may decrease based on a reduced time of recomputation as the partial recomputation policy is used (e.g., compared to the first training process 610). The examples of FIG. 6 relate to the limited number of pipeline stages 611 to 614 and 621 to 624 and the limited number of partial data sets for ease of description. However, in some embodiments, a higher number of pipeline stages and higher amount of partial data sets (higher compared to illustrated numbers of FIG. 6) may be used and therefore, the training time may be significantly reduced.

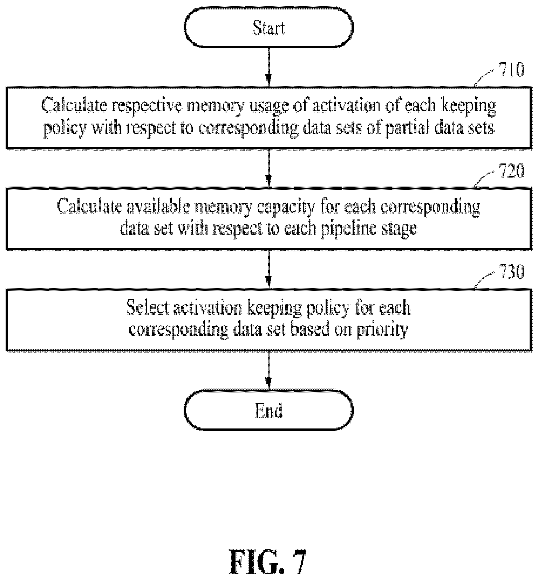

FIG. 7 illustrates a flowchart of an example of a process of selecting a keeping policy based on a priority according to an embodiment. Referring to FIG. 7, in operation 710, an electronic device may calculate a memory usage of activations for each keeping policy with respect to corresponding data sets of partial data sets. The electronic device may calculate the memory usage of activations for each keeping policy of corresponding data sets by simulating a training process of each partial model.

For example, the keeping policies may include at least one of the full recomputation policy, the partial recomputation policy, and the non-recomputation policy. When at least one of the full recomputation policy, the partial recomputation policy, and the non-recomputation policy is applied to each corresponding data set, the electronic device may calculate the capacity occupied in the memory until backward propagation is performed after an activation of each corresponding data set is generated. In some cases, an activation may not occupy a separate memory space when the full recomputation is used until backward propagation. In case of using the non-recomputation, the activations may occupy the memory space until backward propagation. In case of using the partial recomputation, a portion (e.g., a portion generated by an operation group in which recomputation is not performed) of activations may occupy the memory space until the backward propagation is performed.

In operation 720, the electronic device may calculate available memory capacity for each corresponding data set with respect to each pipeline stage. A memory usage level may increase as a training process proceeds using the corresponding data set. The available memory capacity may be calculated when activations are kept in the memory according to each keeping policy.

In operation 730, the electronic device may select an activation keeping policy for each corresponding data set based on a priority. In some cases, the non-recomputation policy may have a higher priority than the partial recomputation policy and the partial recomputation policy may have a higher priority than the full recomputation policy. For example, each of the full recomputation policy, the partial recomputation policy, and the non-recomputation policy are applicable to a corresponding data set. In some examples, the non-recomputation policy may be selected based on considering a memory usage state.

In some cases, the priority may be priorly applied to a corresponding data set that is close to a final data set among the corresponding data sets when there is a competition among training tasks of corresponding data sets based on the priority. For example, a competitive situation may include a situation in which a plurality of corresponding data sets to which a high-priority policy (e.g., the non-recomputation policy) is applicable may exist. However, in some examples, the high-priority policy may be applicable to only some of the plurality of corresponding data sets.

For example, a corresponding data set of a fourth partial data set of a first pipeline stage may correspond to the final data set and a competition between the corresponding data set of the fourth partial data set and a corresponding data set of a third partial data set may occur according to the priority. For example, a situation may occur in which the non-recomputation policy is applicable to one of the corresponding data set of the fourth partial data set and the corresponding data set of the third partial data set by considering the memory usage state. In some cases, the priority may be priorly applied to a training task of the corresponding data set of the fourth partial data set. Accordingly, the fourth partial data set may be trained based on the non-recomputation policy.

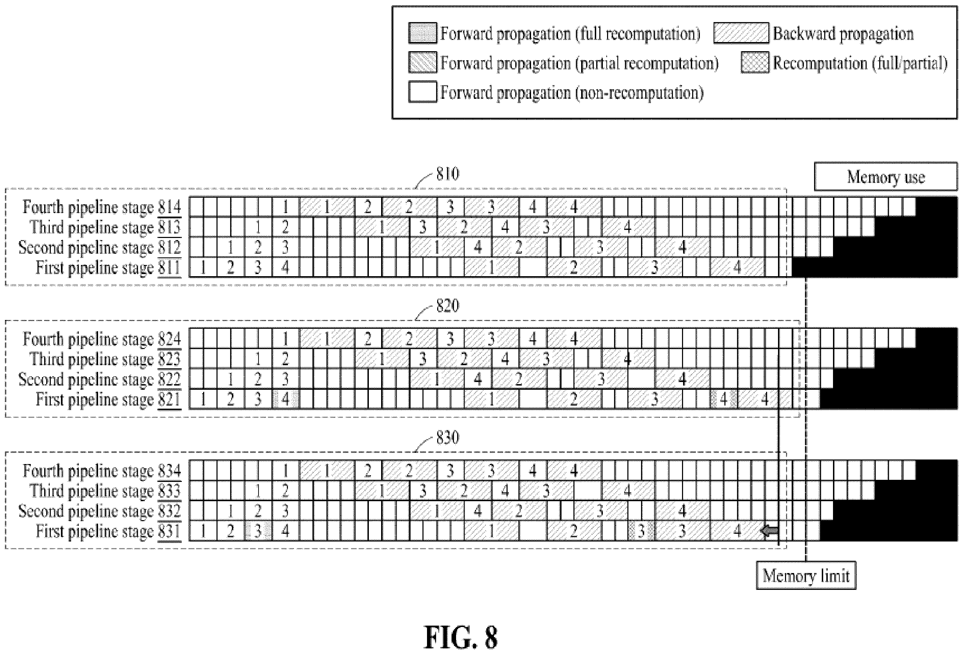

FIG. 8 illustrates an example of applying priority of keeping policies according to an embodiment. Referring to FIG. 8, a first training process 810 may represent an example in which a non-recomputation policy is selected with respect to the corresponding data sets of the partial data sets of pipeline stages 811, 812, 813, and 814. In some cases, the non-recomputation policy may represent a high memory usage level. For example, as shown in FIG. 8, the first pipeline stage 811 of the first training process 810 may exceed a memory limit.

A second training process 820 may represent an example in which a full recomputation policy is selected with respect to a first corresponding data set of the fourth partial data set of the first pipeline stage 821. During a forward computation of the second training process 820, activations of corresponding data sets to which the non-recomputation policy is applied may be kept (e.g., stored) in a memory and activations of corresponding data sets to which the full recomputation policy is applied may not be kept (e.g., stored) in the memory. During a backward computation of the second training process 820, activations of corresponding data sets to which the non-recomputation policy is applied may be loaded from the memory for gradient calculation and activations of corresponding data sets to which the full recomputation policy is applied may be newly generated for gradient calculation.

The full recomputation policy may be selectively applied to the second training process 820 unlike the first training process 810. In some cases, activations of the corresponding data sets to which the full recomputation policy is applied may be newly generated. Accordingly, a memory usage level of the second training process 820 may be lower than the memory usage level of the first training process 810 and may not exceed the memory limit.

A third training process 830 may represent an example in which a full recomputation policy is selected with respect to a first corresponding data set of a third partial data set of the first pipeline stage 831. When the first corresponding data set of the fourth partial data set and the first corresponding data set of the third partial data set compete for the priority, the priority may be priorly applied to the first corresponding data set of the fourth partial data set. Accordingly, the non-recomputation policy may be applied to the first corresponding data set of the fourth partial data set and the full recomputation policy may be applied to the first corresponding data set of the third partial data set. Therefore, the third training process 830 may show a reduced training time compared to the second training process 820 while the memory limit is not exceeded (e.g., in case of the second training process 820).

The examples of FIG. 8 relate to the limited number of pipeline stages 811 to 814, 821 to 824, and 831 to 834 and the limited number of partial data sets for ease of description. However, more pipeline stages and more partial data sets may be used and as also described in FIG. 8, the training time may be significantly reduced.

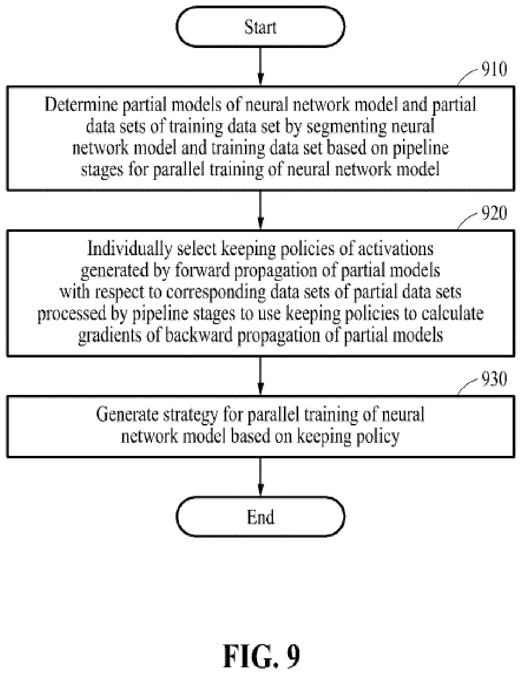

FIG. 9 illustrates a flowchart of an example of a parallel training method according to an embodiment. Referring to FIG. 9, in operation 910, an electronic device may determine partial models of a neural network model and partial data sets of a training data set by splitting the neural network model and the training data set based on pipeline stages for parallel training of the neural network model. In operation 920, the electronic device may individually select keeping policies of activations generated by forward propagation of the partial models with respect to corresponding data sets of the partial data sets processed in the pipeline stages, wherein the activations may be used to calculate gradients of backward propagation of the partial models. In operation 930, the electronic device may generate a strategy for parallel training of the neural network model based on the keeping policies.

A first keeping policy of the keeping policies may be used to train a corresponding data set of the first partial data set of the partial data sets in a first pipeline stage of the pipeline stages and a second keeping policy, which is different from the first keeping policy, of the keeping policies may be used to train a corresponding data set of the second partial data set of the partial data sets in the first pipeline stage.

Operation 920 may include an operation of selecting the keeping policies based on a memory usage state.

The operation of selecting the keeping policies based on the memory usage state may include an operation of selecting the keeping policies to maximize a memory usage within the available memory capacity.

The keeping policies may include at least one of a full recomputation policy that generates activations by performing recomputation during backward propagation without keeping (e.g., storing) the activations. Additionally, the keeping policies may include at least one of a partial recomputation policy that keeps (e.g., stores) a portion of activations and generates the remaining portion of activations by performing recomputation during backward propagation. Additionally, the keeping policies may include at least one of a non-recomputation policy that keeps (e.g., stores) activations and does not perform recomputation and partial recomputation during backward propagation.

In some cases, operation 920 may include an operation of selecting the keeping policies based on a priority of the keeping policies.

For example, the non-recomputation policy may have a higher priority than the partial recomputation policy and the partial recomputation policy may have a higher priority than the full recomputation policy.

In some cases, the priority may be priorly applied to a corresponding data set that is close to a final data set among the corresponding data sets in case of a competition among training tasks of corresponding data sets of the pipeline stages based on the priority.

In some cases, the non-recomputation policy may be priorly applied to the final data set when the non-recomputation policy is applicable to one of a final data set of the corresponding data sets and a data set that is not the final data set of the corresponding data sets.

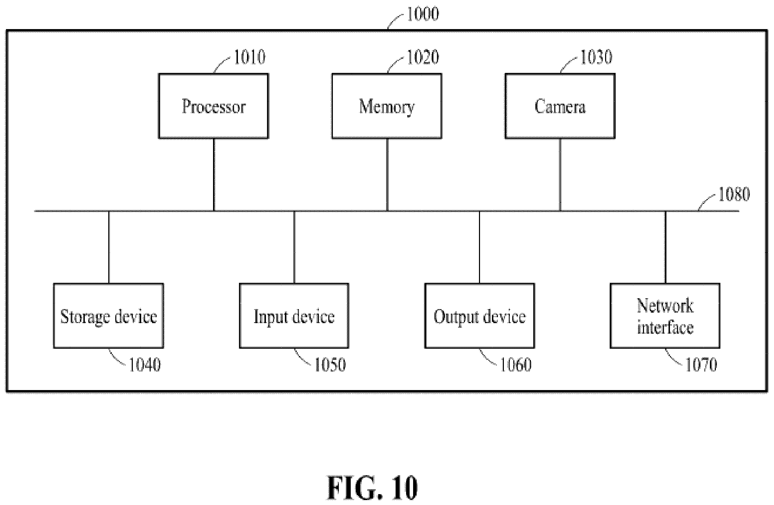

FIG. 10 illustrates an example of a configuration of an electronic device. Referring to FIG. 10, an electronic device 1000 may include a processor 1010, a memory 1020, a camera 1030, a storage device 1040, an input device 1050, an output device 1060, and a network interface 1070 that may communicate with one another through a communication bus 1080. For example, the electronic device 1000 may be implemented as at least a part of a computing device, such as a desktop or a server.

The processor 1010 may execute functions and instructions to be executed in the electronic device 1000. For example, the processor 1010 may process instructions stored in the memory 1020 or the storage device 1040. The processor 1010 may perform the one or more operations described through FIGS. 1 to 9. The memory 1020 may include a computer-readable storage medium or a computer-readable storage device. The memory 1020 may store instructions to be executed by the processor 1010 and may store related information while software and/or an application is executed by the electronic device 1000.

The camera 1030 may capture a photo (image) and/or record a video. For example, the camera 1030 may capture a face image including a face of a user. In some cases, the camera 1030 may provide a three-dimensional (3D) image including depth information associated with objects.

The storage device 1040 may include a computer-readable storage medium or computer-readable storage device. The storage device 1040 may store a higher quantity of information than the memory 1020 for a long time. For example, the storage device 1040 may include a magnetic hard disk, an optical disc, a flash memory, a floppy disk, or other nonvolatile memories known in the art.

The input device 1050 may receive an input from the user via a keyboard and a mouse. In some cases, the input device 1050 may receive an input from the user based on a touch input, a voice input, and an image input. For example, the input device 1050 may include a keyboard, a mouse, a touch screen, a microphone, or any other device that detects the input from the user and transmits the detected input to the electronic device 1000.

The output device 1060 may provide an output of the electronic device 1000 to the user through a visual, auditory, or haptic channel. The output device 1060 may include, for example, a display, a touch screen, a speaker, a vibration generator, or any other device that provides the output to the user. The network interface 1070 may communicate with an external device through a wired or wireless network.

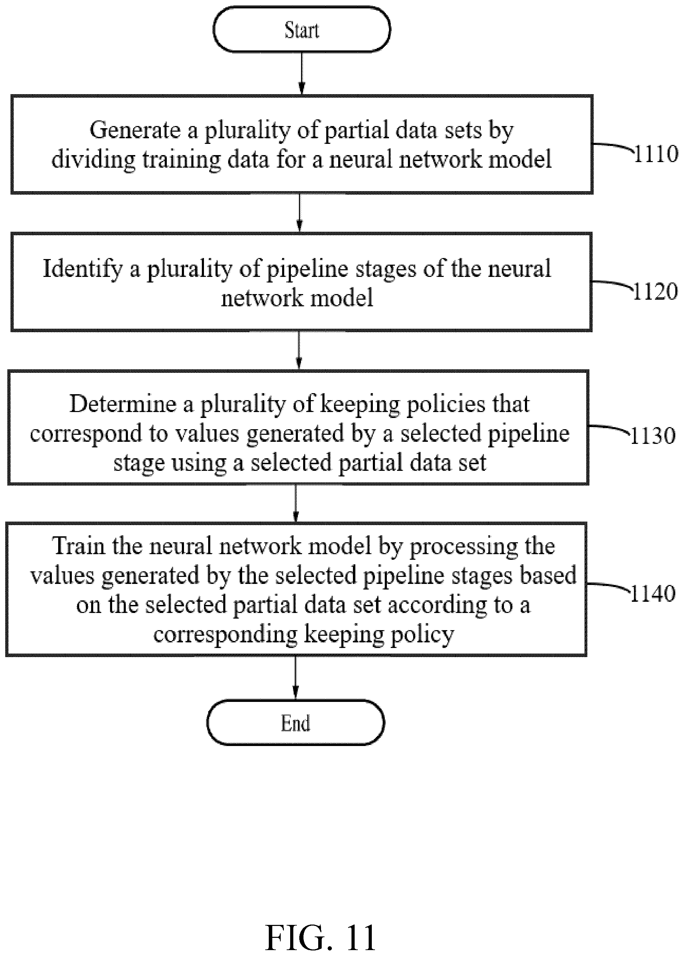

FIG. 11 illustrates a flowchart of an example of a parallel training method according to an embodiment.

Referring to FIG. 11, in operation 1110, the system may generate a plurality of partial data sets by dividing training data for a neural network model. In some cases, the neural network model may be split into partial models and the training data set may be split into partial data sets. For example, layers of the neural network model may be split into partial models and weights of the neural network model may be split into the partial models. In some examples, the partial data sets may correspond to or may be referred to as micro-batches.

In operation 1120, the system may identify a plurality of pipeline stages of the neural network model. In some cases, the pipeline stages may represent different portions of a neural network model that may operate sequentially. For example, each of the pipeline stages may include different layers or blocks of a neural network model. Further details regarding identification of the pipeline stage are described with reference to FIGs. 1, 6, and 8.

In operation 1130, the system may determine a plurality of keeping policies, wherein each of the plurality of keeping policies corresponds to values generated by a selected pipeline stage of the plurality of the pipeline stages using a selected partial data set of the plurality of partial data sets.

According to an embodiment, the keeping policies of activations generated by a forward propagation operation of the partial models may be individually selected with respect to corresponding data sets of partial data sets processed in the pipeline stages, wherein the activations may be used to calculate gradients of a backward propagation operation (e.g., backward propagation operation that follows a forward propagation operation, as described with reference to FIG. 1) of the partial models of the neural network model.

In some cases, the keeping policies may be selected based on a memory usage state. The keeping policies may be selected to maximize the memory usage within the available memory capacity. For example, a strategy for parallel training of the neural network model may be generated based on the selected keeping policies after selection of the keeping policies is completed. For example, the strategy may include information about the pipeline stages, the partial models of the neural network model, the partial data sets of the training data set, the keeping policies, or a combination thereof.

Next, the neural network model may be trained. Referring again to FIG. 11, in operation 1140, the system performs a training of the neural network model by processing the values generated by the selected pipeline stages based on the selected partial data set according to a corresponding keeping policy for each of the plurality of keeping policies.

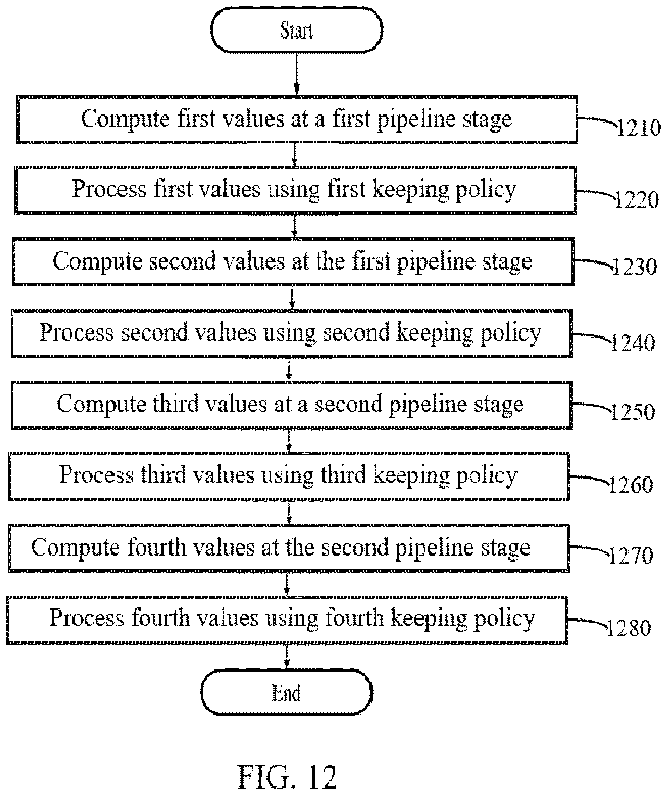

FIG. 12 illustrates a flowchart of an example of a method of training a neural network model, according to an embodiment.

Embodiments of the present disclosure may include a neural network model and training data that may be split based on pipeline stages. In some cases, the neural network model may be split into partial models and the training data set may be split into partial data sets. The partial models may be trained in the pipeline stages (as described with reference to FIG. 1). Additionally, the partial data sets may be trained in the pipeline stages.

According to an example, the training data set may be split into a plurality of partial data sets. In some cases, the partial data sets may be sequentially and parallelly trained using the pipeline method. For example, a first corresponding data set of a first partial data set may be trained in a first pipeline stage of the plurality of pipeline stages. Additionally or alternatively, a second corresponding data set of the first partial data set may be trained in a second pipeline stage based on a training operation result of the first corresponding data set of the first partial data set of the first pipeline stage.

In some cases, a training process of the neural network model may include forward propagation and backward propagation operations. The training operation result may be an activation based on the forward propagation. After completion of the forward propagation using each partial data set, backward propagation may be performed using each partial data set. In some cases, the neural network model may be trained using a gradient that may be calculated using the activation in backward propagation.

According to an embodiment of the present disclosure, keeping policies of activations generated by forward propagation of partial models may be individually selected with respect to corresponding data sets of partial data sets processed in the pipeline stages, wherein the activations may be used to calculate gradients of backward propagation of the partial models of the neural network model.

Referring to FIG. 12, in operation 1210, the system computes first values at a first pipeline stage of the neural network model based on a first partial data set.

In operation 1220, the system processes the first values according to a first keeping policy based on the first pipeline stage and the first partial data set.

In operation 1230, the system computes second values at the first pipeline stage of the neural network model based on a second partial data set.

In operation 1240, the system processes the second values according to a second keeping policy based on the first pipeline stage and the second partial data set.

In operation 1250, the system computes third values at a second pipeline stage of the neural network model based on the first partial data set.

In operation 1260, the system processes the third values according to a third keeping policy based on the second pipeline stage and the first partial data set.

In operation 1270, the system computes fourth values at the second pipeline stage of the neural network model based on the second partial data set.

In operation 1280, the system processes the fourth values according to a fourth keeping policy based on the second pipeline stage and the second partial data set.

As described herein, for example, a first keeping policy of the keeping policies may be used to train a corresponding data set of the first partial data set of the partial data sets in the first pipeline stage and a second keeping policy, which is different from the first keeping policy, of the keeping policies may be used to train a corresponding data set of the second partial data set of the partial data sets in the first pipeline stage. Additionally or alternatively, a plurality of keeping policies may be implemented for the data sets of the partial data set that may be different from each other. The neural network model may be trained, at least in part, based on the selection of the keeping policies.

The units described herein may be implemented using a hardware component, a software component and/or a combination thereof. A processing device may be implemented using one or more general-purpose or special-purpose computers, such as, for example, a processor, a controller and an arithmetic logic unit (ALU), a DSP, a microcomputer, an FPGA, a programmable logic unit (PLU), a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciate that a processing device may include multiple processing elements and multiple types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or collectively instruct or configure the processing device to operate as desired. Software and data may be stored in any type of machine, component, physical or virtual equipment, or computer storage medium or device capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be those specially designed and constructed for the purposes of examples, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter.

The above-described devices may be configured to act as one or more software modules in order to perform the operations of the above-described examples, or vice versa.

As described above, although the examples have been described with reference to the limited drawings, a person skilled in the art may apply various technical modifications and variations based thereon. For example, suitable results may be achieved if the described techniques are performed in a different order and/or if components in a described system, architecture, device, or circuit are combined in a different manner and/or replaced or supplemented by other components or their equivalents.

Accordingly, the invention is defined by the scope of the following claims.

## Claims

1. An electronic device comprising:
a processor; and
a memory configured to store instructions,
wherein, when executed by the processor, the instructions cause the electronic device to:
generate a plurality of partial data sets by dividing training data for a neural network model;
identify a plurality of pipeline stages of the neural network model;
determine a plurality of keeping policies, wherein each of the plurality of keeping policies corresponds to values generated by a selected pipeline stage of the plurality of the pipeline stages using a selected partial data set of the plurality of partial data sets; and
train the neural network model by processing the values generated by the selected pipeline stage based on the selected partial data set according to a corresponding keeping policy for each of the plurality of keeping policies.

2. The electronic device of claim 1, wherein a first keeping policy of the plurality of keeping policies is used for first values corresponding to a first partial data set of the plurality of partial data sets in a first pipeline stage of the plurality of pipeline stages, and
a second keeping policy, which is different from the first keeping policy, of the plurality of keeping policies is used for second values corresponding to a second partial data set of the plurality of partial data sets in a second pipeline stage of the plurality of pipeline stages.

3. The electronic device of claim 1 or 2, wherein, the instructions, in response to being executed by the processor, cause the electronic device to determine a memory usage state, wherein the plurality of the keeping policies are determined based on the memory usage state, and
wherein, the instructions, in response to being executed by the processor, cause the electronic device to optimize a memory usage based on the memory usage state and an available memory capacity.

4. The electronic device of one of claims 1 to 3, wherein the plurality of keeping policies are selected from a set of keeping policy types comprising one or more of
a full recomputation policy that generates the values by performing recomputation during backward propagation without storing the values,
a partial recomputation policy that stores a portion of the values and generates a remaining portion of the values by performing partial recomputation during the backward propagation, and
a non-recomputation policy that stores the values without performing the recomputation during the backward propagation.

5. The electronic device of claim 4, wherein, the instructions, in response to being executed by the processor, cause the electronic device to determine the plurality of keeping policies based on a priority among the set of keeping policy types.

6. The electronic device of claim 5, wherein the non-recomputation policy has a higher priority than the partial recomputation policy and the partial recomputation policy has a higher priority than the full recomputation policy, or
wherein the plurality of keeping policies are determined based on an order of the plurality of partial data sets.

7. A method of training a neural network model, the method comprising:
computing first values at a first pipeline stage of the neural network model based on a first partial data set;
processing the first values according to a first keeping policy based on the first pipeline stage and the first partial data set;
computing second values at the first pipeline stage of the neural network model based on a second partial data set;
processing the second values according to a second keeping policy based on the first pipeline stage and the second partial data set;
computing third values at a second pipeline stage of the neural network model based on the first partial data set;
processing the third values according to a third keeping policy based on the second pipeline stage and the first partial data set;
computing fourth values at the second pipeline stage of the neural network model based on the second partial data set; and
processing the fourth values according to a fourth keeping policy based on the second pipeline stage and the second partial data set.

8. The method of claim 7, wherein the third values and the second values are computed simultaneously.

9. The method of claim 7 or 8, wherein the first keeping policy, the second keeping policy, the third keeping policy, and the fourth keeping policy are selected from a set of keeping policy types comprising one or more of:
a full recomputation policy that generates the values by performing recomputation during backward propagation without storing the values,
a partial recomputation policy that stores a portion of the values and generates a remaining portion of the values by performing partial recomputation during the backward propagation, and
a non-recomputation policy that stores the values without performing the recomputation during the backward propagation.

10. A non-transitory computer-readable storage medium storing instructions that, when executed by a processor, cause the processor to perform a method of parallel training, the method comprising:
generating a plurality of partial data sets by dividing training data for a neural network model;
identifying a plurality of pipeline stages of the neural network model;
determining a plurality of keeping policies, wherein each of the plurality of keeping policies corresponds to values generated by a selected pipeline stage of the plurality of the pipeline stages using a selected partial data set of the plurality of partial data sets; and
training the neural network model by processing the values generated by the selected pipeline stage based on the selected partial data set according to a corresponding keeping policy for each of the plurality of keeping policies.

11. The computer-readable storage medium of claim 10, wherein a first keeping policy of the plurality of keeping policies is used for first values corresponding to a first partial data set of the plurality of partial data sets in a first pipeline stage of the plurality of pipeline stages, and
a second keeping policy, which is different from the first keeping policy, of the plurality of keeping policies is used for second values corresponding to a second partial data set of the plurality of partial data sets in a second pipeline stage of the plurality of pipeline stages.

12. The computer-readable storage medium of claim 10 or 11, further comprising:
determining a memory usage state, wherein the plurality of the keeping policies are determined based on the memory usage state, and.
wherein the plurality of keeping policies are determined to optimize a memory usage based on the memory usage state and an available memory capacity.

13. The computer-readable storage medium of one of claims 10 to 12, wherein the plurality of keeping policies are selected from a set of keeping policy types comprising one or more of
a full recomputation policy that generates the values by performing recomputation during backward propagation without storing the values,
a partial recomputation policy that stores a portion of the values and generates a remaining portion of the values by performing partial recomputation during the backward propagation, and
a non-recomputation policy that stores the values without performing the recomputation during the backward propagation.

14. The computer-readable storage medium of claim 13, wherein the plurality of keeping policies are determined based on a priority among the set of keeping policy types, and wherein the non-recomputation policy has a higher priority than the partial recomputation policy and the partial recomputation policy has a higher priority than the full recomputation policy.

15. The computer-readable storage medium of claim 13, wherein the plurality of keeping policies are determined based on an order of the plurality of partial data sets.
